# EUROPEAN PATENT SPECIFICATION

(11) **EP 1 211 105 B1**
(45) Date of publication and mention of the grant of the patent: **04.10.2006**
(21) Application number: 01204551.4
(22) Date of filing: 24.11.2001
(51) Int. Cl.: B60D 1/60

(54) **Theft protection means for trailer coupling**
Diebstahlsicherungsvorrichtung für Anhängerkupplung
Dispositif de protection antivol pour attelage de remorque

(30) Priority: 29.11.2000 NL 1016742
(43) Date of publication of application: 05.06.2002
(73) Proprietor: Westera, Lex Elzo, 9343 TB Een West (NL)
(72) Inventor: Westera, Lex Elzo, 9343 TB Een West (NL)

(56) References cited:
- WO-A-96/05989
- AU-B- 690 600
- US-A- 4 836 570

## Description

The invention relates to a clamp for securing a coupling between a towing hook and coupling means, comprising a first, L-shaped part, a second part which can slide across a longest leg of the first part,, and a lock, fitting into a cavity in the first part, for fixing the first part to the second part.

A clamp of this kind is known from AU 690 600 B. In the known clamp, the first part is provided with a series of separate cavities, so that it can be used in combination with a padlock as a locking device for a large number of different coupling means. A disadvantage is that the padlock, as a separate item, may easily get lost. Another disadvantage is that the padlock may be removed relatively easily, for example with a pair of shears or a grinding disc, as it can be accessed from all sides.

The clamp according to the invention substantially obviates these disadvantages and is characterised in that an end of a short leg of the first, L-shaped part and an end of the second part have pointed ends, that the cavity consists of at least two holes, connected by a slot positioned lengthwise in the longest leg of the first part, and that the second part is provided with a lock, accommodated in a sleeve which forms an integral part of the second part, of which a projection operationally can slide through the slot and/or can be fixed in a hole. In this way, a one-piece clamp is obtained, which is moreover substantially tamper-proof, as the lock is completely embedded in the first part.

The invention will now be further explained with a reference to the following figures, in which:
Fig. 1A represents a first possible embodiment of an apparatus according to the invention;
Fig. 1B represents a non-removable lock washer;
Fig. 2A represents a slot, through which a projection of the lock may slide;
Fig. 2B represents the lock with the projection in a closed position;
Fig. 2C represents the lock with the projection in an open position;
Fig. 3 represents a second possible embodiment of the apparatus according to the invention.

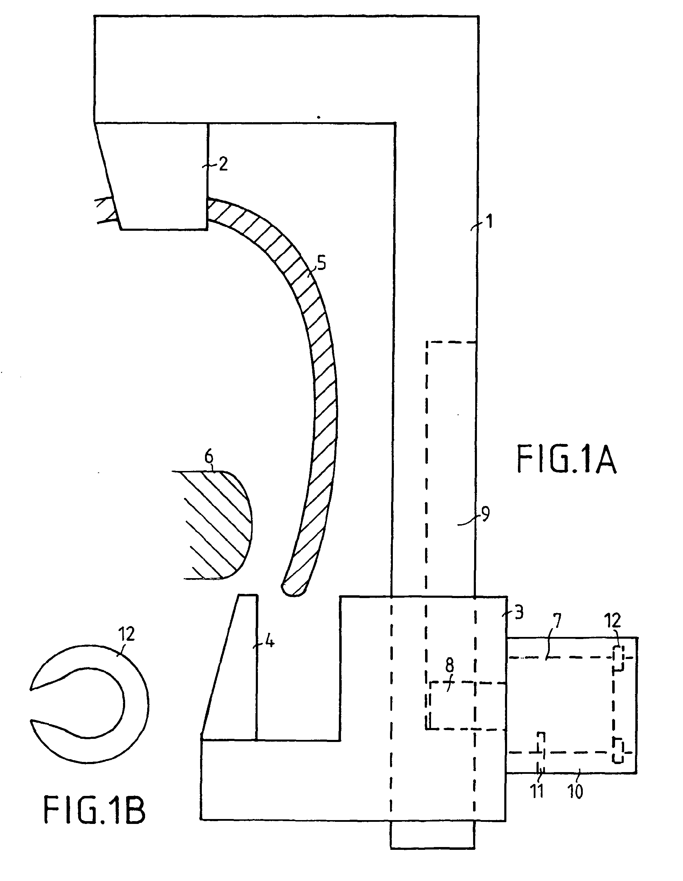

Fig. 1A represents a first possible embodiment of an apparatus according to the invention, consisting of an L-shaped part 1, provided with a first pointed tip 2. L-shaped part 1 is rectangular in cross section and can slide in an opening with a corresponding rectangular cross section in a second part 3, provided with a second pointed tip 4. The apparatus is placed round a coupling means 5 in a vertical position as shown, which coupling means enclose a towing hook, not shown here. For removing it from the towing hook it is essential that a tongue-shaped element 6 which forms part of a cup-shaped element which encloses the spherically shaped end of the towing hook, can move freely. By placing pointed tip 2 in an opening on the top side of coupling means 5, for example next to a grip with which tongue-shaped element 6 can be operated, and by pressing pointed tip 4 between coupling means 5 and tongue-shaped element 6, it is possible to block the coupling. For that purpose, pointed tip 2 and pointed tip 4 are moved at one another, by sliding second part 3 upward over L-shaped part 1. In order to lock the apparatus, a cylinder lock 7 is provided, having a projection 8 which may slide freely inside a slot 9 in the long leg L-shaped part 1 when lock 7 is in a first position and which blocks when lock 7 is in a second position. Lock 7 is mounted in a sleeve 10, which forms an integral part of second part 3. In order to prevent lock 7 from being removed from sleeve 10, a clamping bush 11 is used to fix lock 7 in sleeve 10, as usual in the art. As an additional precautionary measure, a lock washer 12 can be placed in an internal groove in sleeve 10, which lock washer 12 is shaped such that it is almost impossible to remove it. Fig. 1B represents a possible embodiment of such a non-removable lock washer 12. With the aid of an auxiliary tool the lock washer can be compressed and placed inside the groove, after which it is practically impossible to remove it. Moreover, the apparatus is made of steel, as usual in the art and has undergone a skin hardening process.

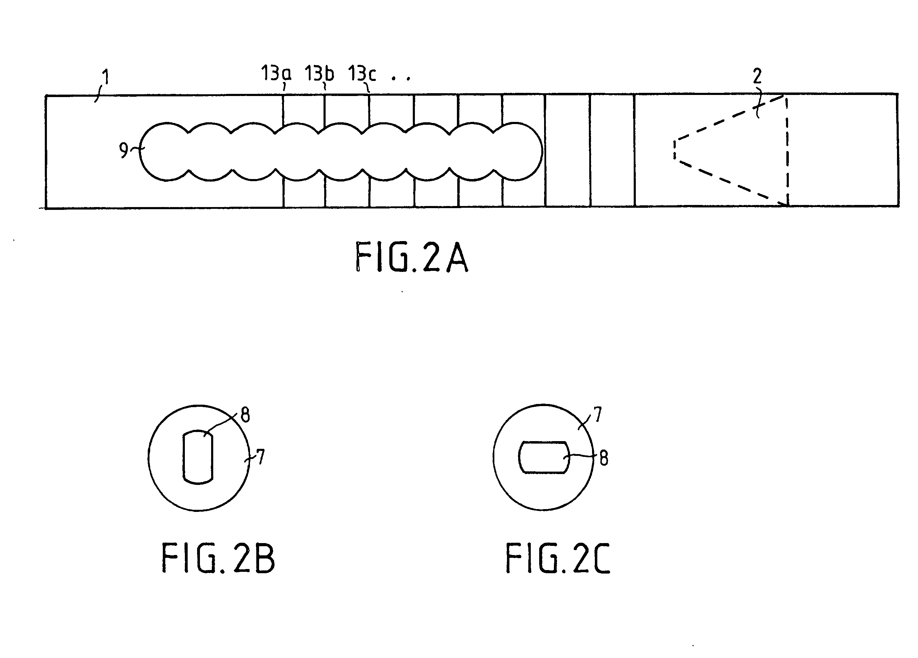

Fig. 2A represents a slot 9 in the long leg of L-shaped part 1, through which a projection of the lock may slide. In this embodiment, slot 9 consists of a series of joint holes. Fig. 2B represents lock 7 with projection 8 in a closed position, in which it is impossible to slide projection 8 through slot 9, as a result of which L-shaped part 1 cannot be slid through second part 3. Fig. 2C represents the lock with the projection in an open position, in which position it is possible to slide projection 8 through slot 9, such that also L-shaped part 1 can be slid through second part 3.

In order to indicate in which positions the apparatus can be locked, it can be useful to provide the long leg of L-shaped part 1 with a number of lines 13a, 13b, 13c, .., next to one of which the edge of second part 3 can be placed before lock 7 is locked. If the apparatus has only two discrete positions, then it is sufficient to make a slot 9 by drilling only two holes and by connecting these holes with a relatively small slot.

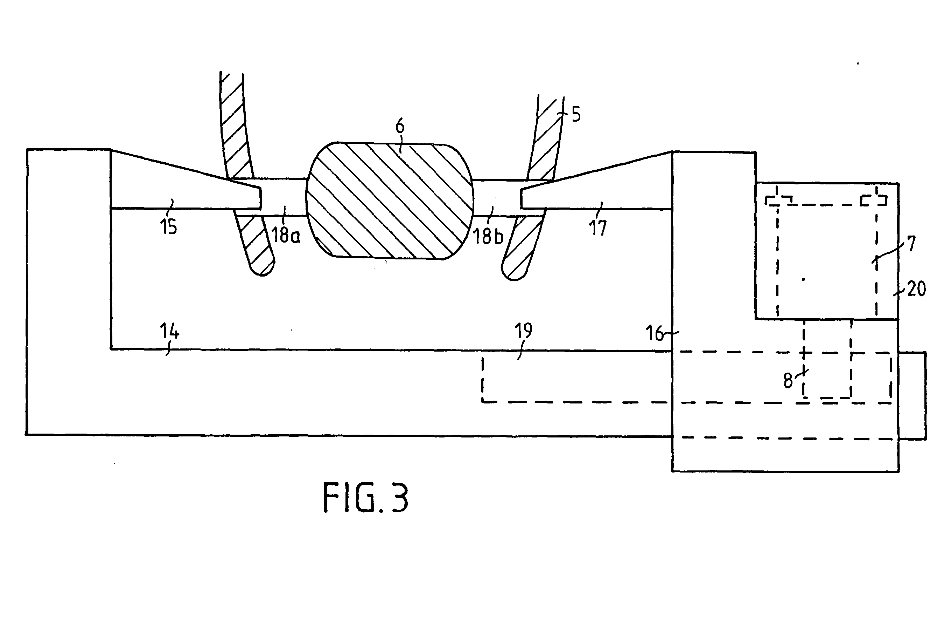

Fig. 3 represents a second possible embodiment of the apparatus according to the invention, consisting of a first part 14, provided with a first pointed tip 15. First part 14 is rectangular in cross section and can slide in an opening with a corresponding rectangular cross section in a second part 16, provided with a second pointed tip 17. The apparatus is shown in a horizontal position, placed round a coupling means 5, which coupling means enclose a towing hook, not shown here. For removing it from the towing hook, it is essential that a tongue-shaped element 6, which forms part of a cup-shaped element that encloses the spherically shaped end of the towing hook, can move freely. In this embodiment, tongue-shaped element 6 is connected to two shafts 18a,18b, which may slide in two slots in coupling means 5. By placing pointed tip 15 and pointed tip 17 in both oppositely placed slots and by mutually locking them, it is possible to block tongue-shaped element 6 and consequently the coupling as well. In the process of locking, pointed tip 15 and pointed tip 17 are moved at one another, by sliding second part 16 over first part 14. In order to lock the apparatus, a cylinder lock 7 is provided, having a projection 8 which may slide freely inside a slot 19 in the long leg of first part 14 if lock 7 is in a first position and which blocks when lock 7 is in a second position. Lock 7 is mounted in a sleeve 20, which forms an integral part of second part 16.

In the first embodiment of the apparatus, as shown in Fig. 1A, both pointed tips are different, because they have to fit into different types of holes. In the second embodiment, as shown in Fig. 3, both pointed tips are equal. It is to be expected that at least 90% of the existing couplings can be protected by one of the two embodiments shown here. More in particular it may be said that for a particular type of coupling, an apparatus according to the invention can be produced which locks that type of coupling, without the need of making additional holes in the coupling.

## Claims

1. Clamp for securing a coupling between a towing hook and coupling means, comprising a first, L-shaped part, a second part which can slide across a longest leg of the first part and a lock, fitting into a cavity (9,19) in the first part, for fixing the first part to the second part, **characterised in that** an end of a short leg of the first, L-shaped part and an end of the second part have pointed ends (2,4,15,17), that the cavity (9,19) consists of at least two holes, connected by a slot positioned lengthwise in the longest leg of the first part, and that the second part (3,16) is provided with a lock (7), accommodated in a sleeve (10,20) which forms an integral part of the second part (3,16), of which a projection (8) operationally can slide through the slot and/or can be fixed in a hole.

## Patentansprüche

1. Klemmvorrichtung für das Sichern einer Kupplung zwischen einer Anhängekupplung und Kupplungsmitteln, bestehend aus einem ersten, L-förmigen Teil, einem zweiten Teil, das entlang einem längeren Schenkel des ersten Teiles gleiten kann, und aus einem in eine im ersten Teil befindliche Vertiefung (9,19) passenden Schloss, zur Befestigung des ersten Teiles an das zweite Teil, **dadurch gekennzeichnet, dass** ein Ende eines kurzen Schenkels des ersten, L-förmigen Teiles und ein Ende des zweiten Teiles mit spitzen Enden (2,4,15,17) versehen sind, dass die Vertiefung (9,19) aus zumindest zwei Löchern besteht, durch eine in Längsrichtung in den längeren Schenkel angebrachte Nut verbunden, und dass das zweite Teil (3,16) mit einem Schloss (7) versehen ist, untergebracht in einer Büchse (10,20), die ein integrales Teil mit dem zweiten Teil (3,16) bildet, von dem ein herausragendes Teil (8) in einem Gebrauchszustand durch die Nut gleiten kann und/oder in einem Loch arretiert werden kann.

## Revendications

1. Organe de fixation pour fixer un couplage entre un crochet de remorquage et un moyen de couplage, comprenant une première partie en forme de L, une seconde partie qui peut coulisser sur la branche la plus longue de la première partie et un organe de verrouillage, s'ajustant dans une cavité (9,19) dans la première partie, pour fixer la première partie à la seconde partie, **caractérisé en ce qu'**une extrémité d'une branche courte de la première partie en forme de L et une extrémité de la seconde partie ont des extrémités pointues (2, 4, 15, 17), que la cavité (9,19) est constituée d'au moins deux trous, reliés par une fente positionnée dans le sens de la longueur dans la branche la plus longue de la première partie, et **en ce que** la seconde partie (3, 16) présente un organe de verrouillage (7), logé dans un manchon (10, 20) qui constitue une partie intégrale de la seconde partie (3, 16), dont une saillie (8) peut coulisser fonctionnellement à travers la fente et/ou peut être fixée dans un trou.
